Europäisches Patentamt

European Patent Office

Office européen des brevets

(11) Publication number: **0 152 983**
**B1**

(12) **EUROPEAN PATENT SPECIFICATION**

(45) Date of publication of patent specification: **01.08.90**

(21) Application number: **85200157.7**

(22) Date of filing: **11.02.85**

(51) Int. Cl.⁵: **B 23 Q 1/26, F 16 C 29/04**

(54) **Slide unit for machine-tools.**

(30) Priority: **13.02.84 IT 2083684 u**

(43) Date of publication of application:
**28.08.85 Bulletin 85/35**

(45) Publication of the grant of the patent:
**01.08.90 Bulletin 90/31**

(84) Designated Contracting States:
**AT BE CH DE FR GB IT LI LU NL SE**

(56) References cited:
**EP-A-0 106 826**
**CH-A- 589 239**
**DD-A- 78 841**
**DE-A-2 656 822**
**DE-A-2 911 646**
**DE-U-8 328 914**
**FR-A-1 081 864**
**FR-E- 87 725**
**GB-A-1 424 469**
**US-A-4 184 719**

(73) Proprietor: **MONDIAL S.p.A.**
**Via E. Filiberto 3**
**I-20149 Milano (IT)**

(72) Inventor: **Gallone, Fiorenzo**
**P. le Accursio 14**
**I-20151 Milano (IT)**

(74) Representative: **Appoloni, Romano et al**
**ING. BARZANO' & ZANARDO MILANO S.p.A. Via**
**Borgonuovo 10**
**I-20121 Milano (IT)**

Courier Press, Leamington Spa, England.

## Description

The present invention relates to a slide unit for machine tools and/or portions thereof, comprising a first element and a second element each of which being such as to serve either as a sliding guide or as a fixed support, the one being slidable relative to the other, wherein said first element is a bar having an octagonal cross-section, said bar having two pairs of guide surfaces perpendicular in respect of each other and two main opposite side surfaces, and said second element comprises a pair of brackets which are constrained to a base and each of said brackets holds a pair of shafts, which are perpendicular to each other and bear rolling means which roll on said two pairs of guide surfaces, as known from GB—A—1 424 469.

Further, slide units are known, essentially consisting of shaped guides or slides of casehardened and hardened alloy steel, the treatments thereof being carried out in a particularly careful way, in order to preserve a high degree of straightness, independently from the length and the section thereof.

Said slides or guides slide or are slidable on suitable supporting devices comprising bearings, mounted on supporting plates, coupled to each other, so as to define complementary seats suitable to accomodate such slides.

In view of such a purpose, the surface of the outer ring of said bearings is beveled on at least one side, and defines, together with an opposite surface of the coupled bearing, said sliding seat. Shaped guides so made are however heavy, and require a high treatment and processing precision. They are manufactured in the form of short bars, positioned close to each other, so as to define sliding ways having a determined length.

The so-made supports and related bearings do not allow a high coupling precision and such a strength to be achieved, as to guarantee the desired sliding safety.

It is an object of the present invention to provide a slide unit being very light, strong, and very simple as far as the structure, and the functional and adjustment characteristics thereof are concerned.

It is further object of the invention to make it possible to provide an easy, speedy and safe connection between said section bars and the several auxiliary elements of the slide unit.

These and further purposes, according to the concept of the present invention, are achieved by providing a slide unit for machine tools and/or portions thereof, as specified above, characterized in that said bar is an extruded hollow bar in light alloy which is provided, on said two main opposite side surfaces, with longitudinal shaped grooves adapted to receive and accommodate a complementary coupling element for optional attachment of an additional element and in that inside said extruded hollow bar is provided a set of longitudinal stiffening ribs, which are positioned substantially transversal to the said two main side surfaces.

Characteristics and peculiarities of a slide unit according to the present invention shall be better understood from the following exemplifying and not limitative disclosure, referring to the enclosed schematic drawings, wherein:

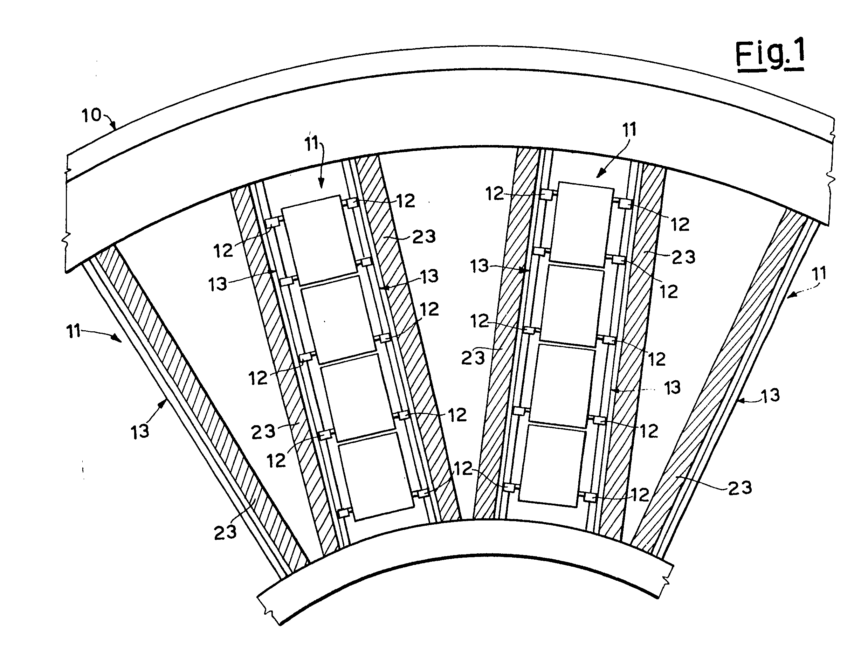

Fig. 1 is a plan view of a portion of a welding line with to-and fro slide units;

Fig. 2 is a detail of a slide unit, in partly sectional view;

Fig. 3 is another example of a slide unit according to the present invention;

Fig. 4 shows a section of a scraper pad being a part of the slide unit of Fig. 1, and

Fig. 5 is a detail of a slide unit, shown in partly sectional view, with improved connections.

Referring to the drawings, in an automated welding line, e.g. for car bodies, indicated with 10 and partly and schematically shown, comprises a series of movable sectors 11 for feeding single components or subassemblies to be positioned and fastened, thus realizing the body, which is being moved tangentially to the single sectors 11 or stations, and progressively formed.

The single sectors 11 comprise a first element 13 and a second element 12 each of which itself being such as to serve either as a sliding guide or as a fixed support. In the Figures said sectors 11 are positioned on supports 12 for sliding on opposite sides on guides 13, which provide slide units according to the present invention.

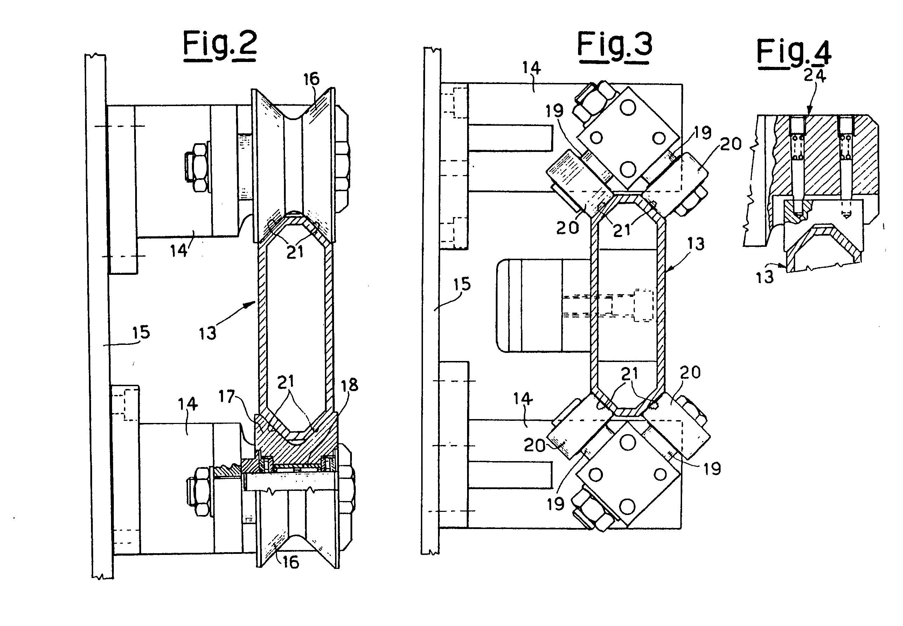

More precisely, said second elements or supports 12 comprise a pair of brackets 14, constrained to a base 15 and bear rolling means, such as e.g. "V"-rollers 16 positioned on axial bearings 17 and radial bearings 18 (Fig. 2), or more simply a pair of shafts 19 perpendicular to each other, and bear bearings 20 (Fig. 3).

Both the rollers 16 and the bearings 20 are positioned on opposite sides of the guides 13 and roll on two pairs of guide surfaces 21 of the first element or guide or bar 13 itself, which is hollow and has an octagonal cross-section, made of a cold-extruded or hot-extruded aluminum alloy, constrained to a frame 23 of the welding line. More precisely, the characteristics of a bar 13 according to the invention may be summarized in the particular shape of the section bar obtained, which, by being provided with surfaces 21 inclined relatively to each other by 90°, provides an outline which is mechanically very efficient, and capable of absorbing loads applied from the most different directions.

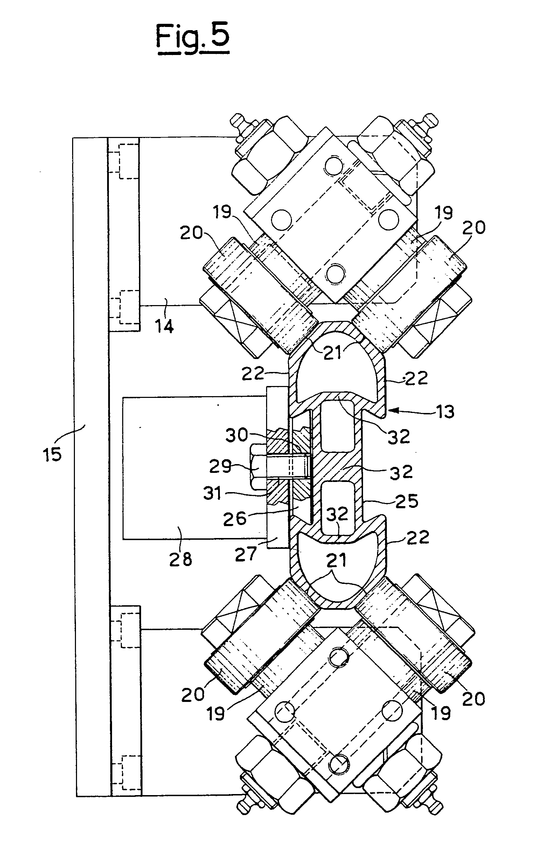

More precisely, in Fig. 5 a bar 13 is provided, according to the invention, on side surfaces of main opposite side surfaces 22 with longitudinal shaped grooves 25, e.g. of the so-called dovetail type, positioned on one side or on both sides, adapted to receive and accommodate a complementary coupling element for optional attachment of an additional element.

Said coupling element comprises a plate element 26, which can be inserted inside the groove 25 with a small clearance, which can support by means of a mating plate 27, acting on the side surfaces 22, a complementary element, schematically shown in 28, thanks to the cooperation of e.g. a screw 29, which is positioned inside a threaded bore 30 of the plate element 26 passing through a corresponding bore 31 of the mating plate 27.

Said complementary or additional elements 28 may be e.g. arms, collets, control racks, and so on, which are thus positioned solidly with the guide 13, it being not necessary to resort to drillings or other processings thereof, which would be difficult and restrictive, in that the would need to be carried out prior to assembly.

Advantageously, inside the section bar or guide 13 longitudinal stiffening or reinforcing ribs 32 may be provided, as to confer a higher strength to the loads applied from most different directions.

It can be immediately understood how the fastening of the mating plate 27, constituting the support base of a complementary element 28, to the bar 13, takes place.

The plate element 26 indeed, fastened by means of the screw 29 to the mating plate 27, is inserted inside the longitudinal groove 25 of the bar 13.

The tightening of the screw or screws 29 causes the engagement of the plate 26 inside its groove 25 thanks to the counter-positioning and the consequent reaction of the mating plate 27 on the side surfaces 22 of the bar 13.

The greater lengths of the plate 26 and of the mating plate 27 cause a higher strength also to loads tangential to the direction of the bar.

The presence of a central rib 32 allows also the plates to be connected by drilling the bar 13, in that precisely in said central zone a high enough resistance exists to the loads transmitted by the screws and by the jointing pins.

The butt jointing of the bar sections 13 in order to achieve the desired length of the slide way can be effected by adhesion, by using the groove-complementary plate joint system, and positioning the plates and related mating plates astride of the bar sections to be jointed, or in an equivalent way, by placing through-screws passing through the conjunction plates and the bars with both systems associated.

Particular advantage results from the possiblitity of fastening to the bar 13 complementary elements 28, without carrying out any drilling, i.e., by using the grooves 25.

In this way indeed a great assembling fastness of the line, of the supports and of the guides is achieved.

Any possible risks of errors in positioning are eliminated, in that the correct positioning is defined only in the assembling stage, and can be modified as desired and according to the arising needs.

This positioning fastness allows consequently a great flexibility and possibility of change and replacement of the so-called complementary elements, according to the needs of the line or of the plant.

In particular, the obtainment is possible by extrusion of so-shaped bars of the desired length, with such dimensional tolerances as for the shape and geometical errors, as to allow said bars to be used without subsequent finishing machining.

The good mechanical characteristics of the aluminum alloy allows large stress loads to be applied with no danger of breakage or of permanent deformation.

When the bars are used as sliding element between fixed supports, the low weight of the same bar is particularly valuable, since this allows to cut down the costs related to the use of motors and of braking plants in that, thanks to the small mass, no high driving or braking torques are needed for the starting and the stopping.

A further characteristic is that the surface of the bar is submitted to a hard anodizing treatment, improving the characteristics of surface hardness of the hardened and tempered aluminum alloy up to a value of 800 Vickers hardness, as a function of the alloy used and of the thickness of oxidized layer.

By means of such hardness values, it is possible to have the high specific pressure due to the linear contact between the rolling elements of the supports and the bar, withstood by the hardened and tempered aluminum alloy. Wear resistance and abrasion resistance are guaranteed by the use of said galvanic treatment.

In addition to the characteristics of producing an extremely hard surface, the hard anodizing treatment offers further advantages:

—The galvanic treatment does not induce deformations on treated components, thus increases of the twists, of the deflections and of planarity defects are not experienced.

—The oxide coat is particularly heat resistant and therefore possible local overheatings do not induce appreciable alterations in device functionality.

—The coat of oxide has a high resistance to corrosive agents and it is therefore possible to use these devices in environments wherein a high concentration of corrosive agents may be found.

—The hard oxide coat is a very good electric insulating material, so no additional protection is required, except in the presence of very strong currents.

—The oxidized surface is of uniform dark colour and shows a very good surface finishing, so it does not require any further finishing treatments.

—The oxidized surface shows noticeable anti-adhesive properties; drops of welding material, and splashes of other agents with characteristics of particular adhesion to metal surfaces are rejected by the anodized surface. A scraper device 24 (Fig. 4) is enough for removing possible deposits of this kind from the bar 13.

The supports 12 may be formed by many combinations of rolling means, depending on the specific type of use, and with notable saving of single rolling components, the brackets 14 may e.g. bear:

—Two combined radial-axial bearings mounted opposed to each other, with a V-shaped outer roller rotatably supported on them. Such a structure is suitable for low loads and high speeds.

—Four radial bearings opposed two by two, rotating on the faces inclined by 45° of the section, particularly suitable, when so positioned, for medium loads and high speeds.

—Eight, or multiples of four radial bearings opposed two by two, rotating on the faces inclined by 45° of the section, used for heavy loads and high speeds.

—Four, or multiples of four linear roller bearings (roller blocks), opposed two by two on the sides inclined by 45° of the section, for heavy loads and limited speeds and accelerations.

Should particular problems arise due to the noise caused by the metallic contact between the supports and the guide bar, the filling of the cavity of the bar can be provided, by injecting, inside the hollow bar, expanded polyurethane, or another similar material, capable of damping the vibrations of the slide unit. A further possibility of damping of sound vibrations consists in the coating with plastic material of the outer ring of the bearing constituting some examples previously described.

A slide unit according to the invention is the ideal solution for all those conveyance or sliding systems for which the requirements of lightness of the running ways and of low friction of the supports are regarded as absolutely necessary, and for those situations wherein low available powers do not allow heavier slide units to achieve significant performance gains. The preferred use is represented, as already mentioned, by the use of the system in the lines with to-and-fro movement for the progress of the assemblies constituting the car bodies on automated and robot-slaved welding lines.

## Claims

1. Slide unit for machine tools and/or portions thereof, comprising a first element (13) and a second element (12), each of which being such as to serve either as a sliding guide or as a fixed support, the one being slidable relative to the other, wherein said first element (13) is a bar having an octagonal cross-section, said bar having two pairs of guide surfaces (21) perpendicular in respect of each other and two main opposite side surfaces (22), and said second element (12) comprises a pair of brackets (14) which are constrained to a base (15) and each of said brackets (14) holds a pair of shafts (19) which are perpendicular to each other and bear rolling means (20) which roll on said two pairs of guide surfaces (21), characterized in that said bar (13) is an extruded hollow bar in light alloy which is provided, on said two main opposite side surfaces (22), with longitudinal shaped grooves (25) adapted to receive and accommodate a complementary coupling element (26, 27, 29) for optional attachment of an additional element (28) and in that inside said extruded hollow bar (13) is provided a set of longitudinal stiffening ribs (32), which are positioned substantially transversal to the said two main side surfaces (22).

2. Slide unit as claimed in claim 1, characterized in that scraper pads (24) are provided, with complementary profile to the two pairs of guide surfaces (21) of said bar (13), suitable to maintain said guide surfaces clean.

3. Slide unit as claimed in claim 1, characterized in that the slide surfaces (21) of said bearings (20) are provided with a coat of plastic material.

4. Slide unit as claimed in claim 1, characterized in that said longitudinal grooves (25) are of the so-called dovetail type.

5. Slide unit as claimed in claim 1, characterized in that said complementary coupling element comprises essentially a plate (26) and a mating plate (27) acting, by means of mutual engagement means (29, 30, 31), in sliding engagement between said main side surface (22) and said longitudinal groove (25).

6. Slide unit as claimed in claim 1, characterized in that at least said two pairs of guide surfaces (21) and said main opposite side surfaces (22) are submitted to hard anodic oxidation.

7. Slide unit as claimed in claim 1, characterized in that within said bar (13) is placed a sound-deadening and vibration-damping material.

## Patentansprüche

1. Schlitten für Werkzeugmaschinen und/oder Teile davon, mit einem ersten Element (13) und einem zweiten Element (12), deren jedes entweder als Gleitführung oder als ortsfester Support dient, wobei das eine relativ zum anderen verschiebbar ist und das erste Element (13) ein Stab mit achteckigem Querschnitt ist, welcher zwei Paare zueinander senkrechter Führungsflächen (21) sowie zwei einander gegenüberliegende Hauptseitenflächen (22) hat, und das zweite Element (12) ein Paar mit einer Grundplatte (15) fest verbundener Winkelstützen (14) aufweist, deren jede ein Paar Zapfen (19) hält, die zueinander senkrecht stehen und Rollen (20) tragen, welche auf den zwei Paaren von Führungsflächen (21) rollen, dadurch gekennzeichnet, daß der Stab (13) ein stranggepreßter Hohlstab aus Leichtmetall ist, der an seinen beiden gegenüberliegenden Hauptseitenflächen (22) mit in Längsrichtung verlaufenden Nuten (25) zum Aufnehmen und Halten eines komplementären Kupplungselementes (26, 27, 29) für die wahlweise Anbringung eines zusätzlichen Elementes (28) versehen ist, und daß innerhalb des stranggepreßten Hohlstabes (13) ein Satz in Längsrichtung verlaufender Versteifungsrippen (32) vogesehen ist, welche im wesentlichen quer zu den beiden Hauptseitenflächen gerichtet sind.

2. Schlitten nach Anspruch 1, dadurch gekennzeichnet, daß Abstreifleisten (24) mit zu den beiden Paaren von Führungsflächen (21) des Stabes (13) komplementärem Profil vorgesehen sind, um die Führungsflächen rein zu halten.

3. Schlitten nach Anspruch 1, dadurch gekennzeichnet, daß die Führungsflächen (21) für die Rollen (20) mit einer Kunststoffbeschichtung versehen sind.

4. Schlitten nach Anspruch 1, dadurch gekennzeichnet, daß die in Längsrichtung verlaufenden Nuten (25) sogenante Schwalbenschwanznunten sind.

5. Schlitten nach Anspruch 1, dadurch gekennzeichnet, daß das komplementäre Kupplungselement im wesentlichen eine Platte (26) und eine Gegenplatte (27) umfaßt, die durch Eingriffmittel (29, 30, 31) in gleitender Berührung zwischen der Hauptseitenfläche (22) und der in Längsrichtung verlaufenden Nut (25) wirken.

6. Schlitten nach Anspruch 1, dadurch gekennzeichnet, daß wenigstens die beiden Paare von Führungsflächen (21) und die gegenüberliegenden Hauptseitenflächen (22) einer harten anodischen Oxidation unterworfen sind.

7. Schlitten nach Anspruch 1, dadurch gekennzeichnet, daß innerhalb des Stabes (13) ein schalldämmendes und vibrationsdämpfendes Material angeordnet ist.

## Revendications

1. Ensemble coulisseau-glissière pour machines-outils et/ou des parties de ces dernières, comprenant un premier élément (13) et un second élément (12) dont chacun est tel qu'il peut servir soit de coulisseau, soit de support fixe, l'un étant coulissant par rapport à l'autre, dans lequel le premier élément (13) est une barre ayant une section droite octogonale, cette barre ayant deux paires de surfaces de guidage (21) perpendiculaires l'une par rapport à l'autre et deux surfaces latérales principales opposées (22), et le second élément (12) comprend une paire de consoles (14) qui sont tenues par une base (15) et chacune de ces consoles (14) porte une paire d'axes (19) qui sont perpendiculaires l'un à l'autre et portent des moyens de roulement (20) qui roulent sur les deux paires de surfaces de guidage (21), caractérisé en ce que la barre (13) est une barre creuse extrudée en alliage léger qui est pourvue sur lesdites deux surfaces latérales principales opposées (22) de rainures longitudinales profilées (25) aptes à recevoir un élément complémentaire de couplage (26, 27, 29) et à s'en accommoder pour la fixation facultative d'un élément additionnel (28) et en ce que ladite barre creuse extrudée (13) est pourvue d'un jeu de membrures longitudinales de raidissement (32) qui sont disposées substantiellement transversalement auxdites deux surfaces latérales principales (22).

2. Ensemble coulisseau-glissière de la revendication 1 caractérisé en ce que des tampons racleurs (24) sont prévus avec des profils complémentaires aux deux paires de surfaces de guidage (21) de ladite barre (13) et sont appropriés à tenir propres ce surfaces de guidage.

3. Ensemble coulisseau-glissière de la revendication 1 caractérisé en ce que les surfaces de guidage (21) des moyens de roulement (20) sont pourvues d'une couche de matière plastique.

4. Ensemble coulisseau-glissière de la revendication 1 caractérisé en ce que les rainures longitudinales (25) sont du type dit en queue d'aronde.

5. Ensemble coulisseau-glissière de la revendication 1 caractérisé en ce que ledit élément complémentaire de couplage comprend essentiellement une plaque (26) et une contreplaque (27) agissant, à l'aide de moyens mutuels d'engagement (29, 30, 31), en contact de glissement sur ladite surface latérale principale (22) et ladite rainure longitudinale (25).

6. Ensemble coulisseau-glissière de la revendication 1 caractérisé en ce qu'au moins lesdites deux paires de surfaces de guidage (21) et lesdites surfaces latérales principales opposées (22) sont soumises à une oxydation anodique de durcissement.

7. Ensemble coulisseau-glissière de la revendication 1 caractérisé en ce qu'à l'intérieur de la barre (13) est placée une matière d'assourdissement des bruits et d'amortissement des vibrations.

Fig.1

# Fig.2

16

14

21

15

13

14   17   21   18

16

# Fig.3

14

19

19

20

20   21

15

13

14

21   20

20

19

19

# Fig.4

24

13

13

EP 0 152 983 B1

# Fig.5